# EUROPÄISCHE PATENTANMELDUNG

(11) **EP 0 987 572 A2**
(43) Veröffentlichungstag der Anmeldung: **22.03.2000**
(21) Anmeldenummer: 99116560.6
(22) Anmeldetag: 24.08.1999
(51) Int. Cl.: G02B 6/42

(54) **Vorrichtung für den Anschluss von Lichtwellenleitern an eine elektrische Schaltung**

(30) Priorität: 17.09.1998 DE 19842687
(71) Anmelder: Siemens Electromechanical Components GmbH & Co. KG, 81739 München (DE)
(72) Erfinder: Bauer, Jürgen, 68159 Mannheim (DE); Greuel, Ingo, 67346 Speyer (DE); Flick, Christian, 76863 Herxheim-Hayna (DE); Heckel, Werner, Dr., 67346 Speyer (DE); Kempf, Dominik, 68165 Mannheim (DE); Hamburger, Andreas, 76726 Germersheim (DE); Schmidt, Helge, Dr., 67346 Speyer (DE)
(74) Vertreter: Epping, Wilhelm, Dr.-Ing.

(57) **Zusammenfassung**

Ein Wandlerbaustein (1) weist mit hoher Genauigkeit aus Kunststoff gefertigte Spritzteile (7,8) auf. Die Spritzteile (7,8) weisen Referenzflächen (13) und Ausnehmungen (14) auf, die sich in einer mit hoher Genauigkeit definierten Lage bezüglich eines Wandlerchips (2) befinden. Dadurch wird die Justage des Wandlerbausteins (1) bei der Herstellung und bei der Montage in eine Stiftleiste wesentlich vereinfacht.

## Beschreibung

Die Erfindung betrifft eine Vorrichtung für den Anschluß von Lichtwellenleitern an eine elektrische Schaltung mit einer Trägerstruktur, an der wenigstens ein Wandler angebracht ist.

Derartige Vorrichtungen sind allgemein bekannt. Üblicherweise handelt es sich um Wandlerbausteine, die als Trägerstruktur ein Stanzgitter aufweisen, das auch die Anschlußstifte des Wandlerbausteins bildet. An das Stanzgitter sind optoelektronische Wandlerchips sowie Steuerchips mit Golddrähtchen angeschlossen. Das Stanzgitter und die daran angebrachten optoelektronischen Wandlerchips und Steuerchips sind in einen Gießharzkörper eingegossen, der das Stanzgitter sowie die daran befestigten optoelektronischen Wandlerchips und Steuerchips vor mechanischen Beschädigungen schützt.

Die bekannten optischen Wandlerbausteine werden üblicherweise in Stiftleisten eingebracht, an die Buchsenleisten anschließbar sind, die die Lichtwellenleiter tragen. Für eine gute Kopplung zwischen dem jeweiligen Lichtwellenleiter und dem zugeordneten optischen Wandlerchip ist eine sehr genaue Justage des optischen Wandlerchips zu der optischen Achse des Lichtwellenleiters erforderlich. Dies wiederum bedingt eine genaue Justage des optoelektronischen Wandlerbausteins in der Stiftleiste.

Ein Nachteil der bekannten Wandlerbausteine ist jedoch, daß die Lage der Wandlerchips bezüglich der Außenkanten des Gießharzkörpers verhältnismäßig großen Fertigungstoleranzen unterworfen ist, da sich der Gießharzkörper beim Aushärten im allgemeinen etwas verzieht. Dies liegt vor allem an den billigen Gießformen aus Kunststoff, die für eine kostengünstige Durchführung des Verfahrens verwendet werden müssen. Denn wegen der langen Aushärtezeiten der verwendeten Gießharze ist eine große Anzahl von Gießformen erforderlich. Die Folge dieser Tatsache ist, daß bei der Montage der herkömmlichen Wandlerbausteine ein technisch aufwendiger und kostspieliger Justierschritt erfolgen muß, um die Lage der Wandlerchips auf die optische Achse der Lichtwellenleiter auszurichten.

Ausgehend von diesem Stand der Technik liegt der Erfindung die Aufgabe zugrunde, einen Wandlerbaustein zu schaffen, dessen Wandler durch einen einfachen Fügevorgang auf den zugeordneten Lichtwellenleiter ausrichtbar ist.

Diese Aufgabe wird erfindungsgemäß dadurch gelöst, daß an die Trägerstruktur wenigstens ein Kunststoffspritzteil angespritzt ist, durch das die Lage jedes Wandlers zum zugeordneten Lichtwellenleiter ausrichtbar ist.

Dadurch, daß beim Spritzguß sehr kleine Fertigungstoleranzen eingehalten werden können, eignet sich das Kunststoffspritzteil als Referenz bei der Fertigung des Wandlerbausteins und bei der Justage des Wandlerbausteins in einer Stiftleiste. Insbesondere, wenn das Kunststoffspritzteil zu Beginn des Herstellungsvorgangs an die Trägerstruktur angespritzt wird, läßt es sich in den nachfolgenden Prozeßschritten zum Ausrichten und Justieren verwenden. So kann beispielsweise beim Aufbringen des optoelektronischen Wandlers das Kunststoffspritzteil in eine komplementäre Halterung eingebracht werden und der optoelektronische Wandler in eine mit hoher Genauigkeit definierte Lage bezüglich der Außenflächen des Kunststoffspritzteils gebracht werden. In gleicher Weise kann dann durch Einfügen des Kunststoffspritzteils in eine komplementäre Halterung der Stiftleiste der optoelektronische Wandler in eine präzise Lage bezüglich des zugeordneten Lichtwellenleiters gebracht werden. Somit ist bei der Montage des Wandlerbausteins in eine Stiftleiste keine aktive Justage erforderlich. Folglich sind die Taktzeiten bei der Montage der Wandlerbausteine in die Stiftleiste im Vergleich zur Montage von herkömmlichen Wandlerbausteinen in eine Stiftleiste wesentlich kürzer.

Nachfolgend werden Ausführungsbeispiele der Erfindung anhand der Zeichnung im einzelnen beschrieben. Es zeigen:
- Figur 1: eine Seitenansicht eines Wandlerbausteins, der zwei balkenförmige Kunststoffspritzteile aufweist;
- Figur 2: eine Querschnittsansicht entlang der Schnittlinie II-II in Figur 1;
- Figur 3: eine perspektivische Ansicht des Wandlerbausteins aus den Figuren 1 und 2;
- Figur 4: eine Seitenansicht eines abgewandelten Ausführungsbeispiels des Wandlerbausteins;
- Figur 5: eine Querschnittsansicht entlang der Schnittlinie V-V in Figur 4;
- Figur 6: eine Seitenansicht eines weiteren abgewandelten Ausführungsbeispiels des Wandlerbausteins; und
- Figur 7: eine Querschnittsansicht entlang der Schnittlinie VII-VII in Figur 6.

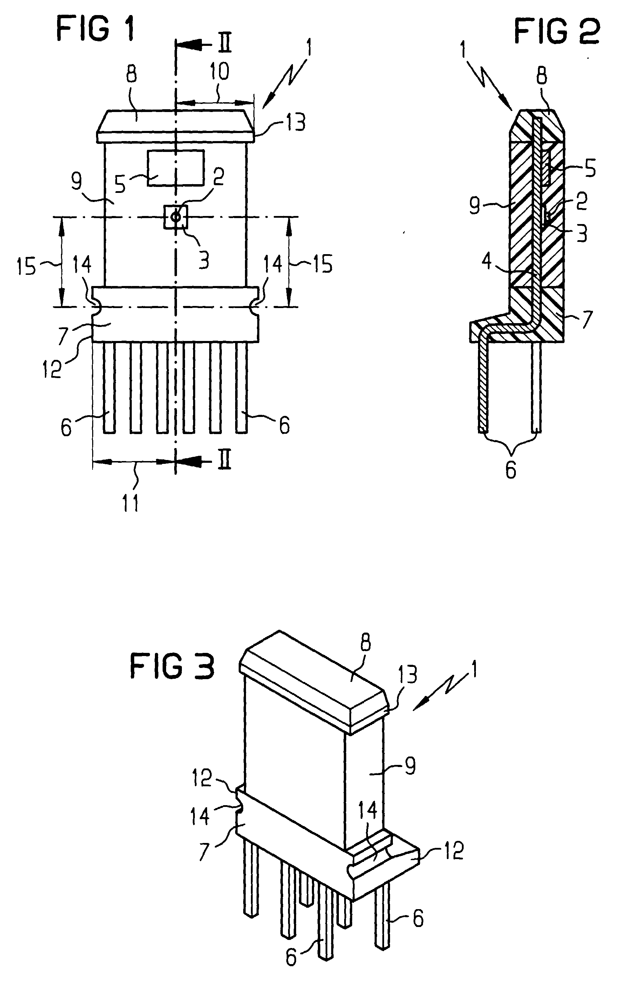

Figur 1 stellt eine Seitenansicht eines optoelektronischen Wandlerbausteins 1 dar, der in eine Stiftleiste einsetzbar ist. An der Stiftleiste kann eine Buchsenleiste angebracht werden, die Lichtwellenleiter trägt. Wenn die Buchsenleiste an die mit den Wandlerbausteinen 1 versehene Stiftleiste angebracht ist, koppelt der Lichtwellenleiter an einen Wandlerchip an. Der Wandlerchip 2 kann beispielsweise eine Leuchtdiode oder eine Fotodiode sein.

Wie in Figur 2 erkennbar ist, ist der Wandlerchip 2 über einen Sockel 3 auf ein Stanzgitter 4 aufgebracht. Auf dem Stanzgitter 4 ist ferner auch ein Steuerchip 5 befestigt, der die zur Ansteuerung des Wandlerchips 2 notwendige Steuerlogik enthält. Das Stanzgitter 4 dient nicht nur als Träger für den Wandlerchip 2 und den Steuerchip 5, sondern bildet auch Anschlußstifte 6 für die Stromversorgung und Ansteuerung des Wandlerbausteins 1. Im Bereich der Anschlußstifte 6 ist an das Stanzgitter 4 ein Stiftbalken 7 aus Kunststoff mit Hilfe eines Spritzgußverfahrens angespritzt. In gleicher Weise ist in einem Kopfbereich des Wandlerbausteins 1 ein Kopfbalken 8 aus Kunststoff an das Stanzgitter 4 angespritzt. Der Stiftbalken 7 und der Kopfbalken 8 sind mit Fertigungstoleranzen im Bereich von 0,02 mm angefertigt. Durch diese genaue Maßhaltigkeit der Außenflächen und Außenkanten des Stiftbalkens 7 und des Kopfbalkens 8 lassen sich die Außenflächen und Außenkanten des Stiftbalkens 7 und des Kopfbalkens 8 als Referenz bei der Herstellung des optoelektronischen Wandlerbausteins 1 verwenden.

Zweckmäßigerweise werden für die Herstellung des Wandlerbausteins 1 zunächst der Stiftbalken 7 und der Kopfbalken 8 an das Stanzgitter 4 angespritzt. Durch Einlegen in eine komplementäre Halterung kann dann beim Aufbringen des Wandlerchips 2 eine mit hoher Genauigkeit definierte Lage des Wandlerchips 2 bezüglich der Außenflächen oder Außenkanten des Stiftbalkens 7 oder Kopfbalkens 8 bewerkstelligt werden. Weiterhin können der Stiftbalken 7 und der Kopfbalken 8 auch bei der Montage des Wandlerbausteins 1 in eine Stiftleiste als Referenzflächen dienen, um eine definierte Lage des Wandlerbausteins 1 in der Stiftleiste und damit eine definierte Lage des Wandlerchips 2 bezüglich des Lichtwellenleiters in der Buchsenleiste zu gewährleisten. Somit ist bei der Montage des in den Figuren 1 bis 3 dargestellten Wandlerbausteins 1 in die Stiftleiste keine aktive Justage erforderlich. Die bei der Montage herkömmlicher Wandlerbausteine in eine Stiftleiste erforderliche aktive Justage wird beim Wandlerbaustein 1 gemäß der Erfindung durch ein einfaches Einfügen des optoelektronischen Wandlerbausteins 1 in eine zu dem Stiftbalken 7 und dem Kopfbalken 8 komplementäre Halterung ersetzt. Gegenüber der Herstellung und Montage herkömmlicher Wandlerbausteine vereinfacht sich die Herstellung und Montage des Wandlerbausteins 1 erheblich. Insbesondere können die Taktzeiten bei der Montage des Wandlerbausteins 1 in eine Stiftleiste verkürzt werden, da die aufwendigen Justierschritte, die für die Montage herkömmlicher Wandlerbausteine in eine Stiftleiste erforderlich sind, entfallen.

Wie in Figur 1 angedeutet, können unterschiedliche Außenflächen des Stiftbalkens 7 und des Kopfbalkens 8 als Referenzfläche dienen. Beispielsweise ist es möglich, wie durch die Pfeile 10 und 11 angedeutet, eine Seitenfläche 12 des Stiftbalkens 7 oder eine Seitenfläche 13 des Kopfbalkens 8 als Referenzfläche zu verwenden. In gleicher Weise ist es möglich, beispielsweise am Stiftbalken 7 Ausnehmungen 14 vorzusehen, deren Geometrie zu einem definierten Verhältnis zur Lage des Wandlerchips 2 steht. Wie in Figur 1 durch die Doppelpfeile 15 angedeutet, ist beim Wandlerbaustein 1 das Zentrum der halbkreisförmigen Ausnehmungen 14 in seiner Lage mit hoher Genauigkeit auf den Ort des Wandlerchips 2 ausgerichtet.

Um den Wandlerchip 2, den Steuerchip 5 und das Stanzgitter 4 vor mechanischen Beschädigungen und gegen Korrosion zu schützen, ist der Raum zwischen dem Stiftbalken 7 und dem Kopfbalken 8 mit einem transparenten Harz 9 vergossen. Die Eigenschaften des Harzes 9 sind dabei so gewählt, daß sich die Referenzflächen des Stiftbalkens 7 und des Kopfbalkens 8 beim Aushärten nicht verziehen.

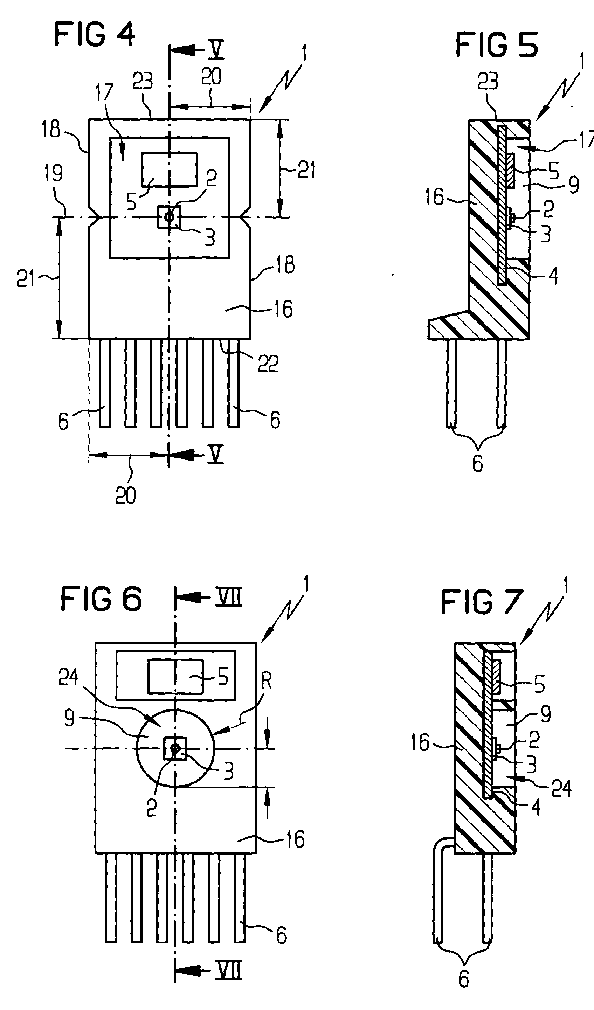

In Figur 4 und 5 ist ein weiteres Ausführungsbeispiel des Wandlerbausteins 1 dargestellt. Bei diesem Ausführungsbeispiel ist an das Stanzgitter 4 ein Justierrahmen 16 angespritzt, der über dem Steuerchip 5 und dem Wandlerchip 2 ein Fenster 17 aufweist. Ferner sind in Seitenflächen 18 Justierkerben 19 ausgebildet. Wie in Figur 4 durch die Doppelpfeile 20 angedeutet, dienen die Seitenflächen 18 als Referenzflächen für die Justage des Wandlerbausteins 1. Anhand der Doppelpfeile 21 wird deutlich, daß auch eine Anschlußseite 22 oder eine Kopfseite 23 als Referenzfläche dienen.

Gegenüber den in den Figuren 1 bis 3 dargestellten Ausführungsbeispielen des Wandlerbausteins 1 weist das in Figuren 4 und 5 dargestellte Ausführungsbeispiel des Wandlerbausteins 1 den Vorteil auf, daß der Justierrahmen 16 einen geschlossenen Körper bildet. Dadurch ist die Gefahr, daß sich der Justierrahmen 16 beim Aushärten des in das Fenster 17 eingebrachten Harzes 9 verzieht, vermindert.

Figur 6 und 7 zeigen schließlich ein weiteres Ausführungsbeispiel, bei dem der Justierrahmen 16 mit einer auf den Wandlerchip 2 zentrierten, zylinderförmigen Ausnehmung 24 versehen ist. Bei diesem Ausführungsbeispiel dient die Innenfläche der Ausnehmung 24 als Referenzfläche für die Justage bei der Herstellung und Montage des Wandlerbausteins 1.

Das in den Figuren 6 und 7 dargestellte Ausführungsbeispiel weist den Vorteil auf, daß die Innenfläche der Ausnehmung 24 gegen mechanische Beschädigungen beim Handhaben des Wandlerbausteins 1 während der Herstellung gut geschützt ist, wohingegen bei freiliegenden Außenflächen stets die Gefahr von mechanischen Beschädigungen besteht.

Es sei angemerkt, daß weitere Ausführungsbeispiele denkbar sind. So ist bei einem abgewandelten Ausführungsbeispiel des in den Figuren 1 bis 3 dargestellten Wandlerbausteins 1 nur ein einzelner Justierbalken vorhanden. Weiterhin können die in den Figuren 4 bis 7 dargestellten Ausführungsbeispiele dahingehend abgewandelt werden, daß auch auf der dem Wandlerchip abgewandten Seite des Stanzgitters 4 der Justage dienende Ausnehmungen im Justierrahmen 16 vorgesehen sind.

## Patentansprüche

1. Vorrichtung für den Anschluß von Lichtwellenleitern an eine elektrische Schaltung mit einer Trägerstruktur (4), an der wenigstens ein Wandler (2) angebracht ist,
**dadurch gekennzeichnet,** daß an die Trägerstruktur (4) wenigstens ein Kunststoffspritzteil (7,8,16) angespritzt ist, durch das die Lage jedes Wandlers (2) zum zugeordneten Lichtwellenleiter ausrichtbar ist.

2. Vorrichtung nach Anspruch 1,
**dadurch gekennzeichnet,** daß die Trägerstruktur (4) mit einer Reihe von nebeneinander angeordneten Anschlußkontakten (6) versehen ist.

3. Vorrichtung nach Anspruch 1 oder 2,
**dadurch gekennzeichnet,** daß an die Trägerstruktur (4) ein quer zu den Anschlußkontakten (6) verlaufender Querbalken angespritzt ist.

4. Vorrichtung nach Anspruch 1 oder 2,
**dadurch gekennzeichnet,** daß an die Trägerstruktur (4) ein Paar von quer zu der Reihe von Anschlußkontakten (6) verlaufenden Querbalken (7,8) angeordnet sind.

5. Vorrichtung nach Anspruch 1 oder 2,
**dadurch gekennzeichnet,** daß an die Trägerstruktur (4) ein wenigstens auf einer Seite mit einer Ausnehmung (17,24) versehener Ausrichtkörper (16) angespritzt ist.

6. Vorrichtung nach Anspruch 5,
**dadurch gekennzeichnet,** daß der Ausrichtkörper (16) auf gegenüberliegenden Seiten mit Ausnehmungen (14,19) versehen ist.

7. Vorrichtung nach einem der Ansprüche 1 bis 6,
**dadurch gekennzeichnet,** daß der Wandler (2) in ein transparentes Kunstharz (9) eingegossen ist.

8. Vorrichtung nach einem der Ansprüche 1 bis 9,
**dadurch gekennzeichnet,** daß die Trägerstruktur ein gestanztes Blech (4) ist.
